# EUROPEAN PATENT APPLICATION

(11) **EP 4 726 660 A1**
(43) Date of publication of application: **15.04.2026**
(21) Application number: 24206124.0
(22) Date of filing: 11.10.2024
(51) Int. Cl.: G06T 15/04, G06T 19/20

(54) **METHOD OF ADAPTING A CLOTH MODEL ON AN AVATAR MODEL**

(71) Applicant: Finfin Play AG, 8002 Zürich (CH)
(72) Inventor: GIANNAKOPOULOS, Panagiotis, 15127 Melissia (GR); WILSON, Benjamin William, SM3 9DF Sutton (GB)
(74) Representative: Mayer, Aline Sophie

(57) **Abstract**

A computer implemented method of adapting a cloth model (211) on an avatar model (111) creating a fitted cloth model (211) in a three-dimensional virtual reality world, comprises the steps of scaling the cloth model (211) uniformly as well as stretching and/or shrinking of the model uniformly matching an overall size of the avatar model (111) to generate a uniformly scaled cloth model. A plurality of polygons covering the surface of the avatar model (111) is defined. A plurality of groups of polygons (412) based on a predetermined number of said polygons is defined and one vertex for each polygon group is assigned in UV space. A color relating to the polygon groups (410) related to the avatar model (111) as well as related to the cloth model (211) is assigned. Then the polygon groups (410) relating to the avatar model (111) or the cloth model (211) are displayed, whichever is representing the highest layer.

## Description

### TECHNICAL FIELD

The present invention relates to a computer implemented method of adapting a cloth model on an avatar model creating a fitted cloth model in a three-dimensional virtual reality world.

### PRIOR ART

WO 2022/197385 A1 discloses a computer-implemented method to provide layered clothing on three-dimensional (3D) avatars wherein the layered clothing conforms to an underlying body and/or clothing layer. The known method comprises: identifying body feature points of a body cage of a 3D avatar having an avatar body; mapping inner feature points, of an inner cage of a first piece of clothing, to the body feature points of the body cage to obtain a deformed first piece of clothing that conforms to the avatar body; fitting the deformed first piece of clothing onto the avatar body by at least partially enveloping the avatar body with the deformed first piece of clothing; mapping inner feature points, of an inner cage of a second piece of clothing, to outer feature points of an outer cage of the deformed first piece of clothing to obtain a deformed second piece of clothing that conforms to the outer cage of the first piece of clothing; and fitting the deformed second piece of clothing onto the avatar body by at least partially enveloping the avatar body, having the deformed first piece of clothing fitted thereon, with the deformed second piece of clothing. If an additional clothing layer (such as an overcoat or other article of clothing) is to be fitted over the first clothing layer and/or over other parts of the avatar body, then the feature points of the inner cage of such additional clothing layer are mapped to the corresponding feature points of the outer cage.

US 11,145,138 B2 is related to a virtual reality presentation of layers of clothing on avatars, especially generating an avatar wearing multiple layers of clothing. The reduced clothing model is simplified as painting the texture of the reduced clothing model onto the avatar model.

WO 2023/152153 A1 shows different approaches for an improved avatar creation.

### SUMMARY OF THE INVENTION

Based on the prior art it is an object of the present invention to improve the combination of an avatar model with one or more clothing layers provided by independent cloth models.

The object is solved with a computer implemented method of adapting a cloth model on an avatar model as a 3D model creating a fitted cloth model in a three-dimensional virtual reality world, comprising the steps of
- scaling the cloth model uniformly as well as stretching and/or shrinking of the model uniformly matching an overall size of the avatar model to generate a uniformly scaled cloth model,
- defining a plurality of polygons covering the surface of the avatar model,
- defining a plurality of groups of polygons based on a predetermined number of said polygons,
- providing an UV map of the 3D Model of the avatar model and/or applied cloth model,
- assigning one dot for each polygon group in the UV map,
- assigning a color to the polygon groups related to the avatar model,
- assigning a color to the polygon groups related to the cloth model, and
- displaying the polygon groups relating to the avatar model or the cloth model whichever is the highest layer.

Providing a predetermined color value for a group of polygons which is then given to a vertex provides an improved handling of the layering, since the determination of the highest layer to be represented is facilitated.

When the first cloth model is mapped on the surface of the avatar model, the first cloth model achieves the position of the highest level so a stacking of different layers of clothing can be easily achieved.

In order to improve the representation of clothing assets, the mapping can be provided with a predetermined distance from the surface of the avatar model, still achieving the object of the invention with an improved representation. The distance can be determined as a static value over all vertices and/or polygon groups. The distance can also be determined depending on the position of the polygon group on the avatar model, e.g. being larger at joints and smaller e.g. near the wrists etc. The distance can also be implemented into the cloth model, Then the distance provided is the sum of the avatar model and cloth model distances, or, in the case of two superposing cloth models, the sum of the distances of both cloth models, which can further be modulated by the underlying avatar model. In any case, the distance is determined for each polygon group and associated to the vertex.

The distance of a crushed clothing asset from the avatar model surface modifies the volume of the garment underneath. This method maintains realistic mass and volume, allowing garments to layer naturally. Due to this choice of using a specific distance or specific distances, this happens in real-time on any phone, without requiring significant processing power or offline solutions. This is different to WO 2022/197385 A1 where textures are projected onto the body avatar to simulate the appearance of garments.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows an avatar model wearing a cloth model;
- Fig. 2: shows the avatar model of Fig. 1 with a crushed cloth model;
- Fig. 3: shows a computer system with database related entries;
- Fig. 4: shows a detail view of the clothing asset on the avatar model of Fig. 2;
- Fig. 5: shows a thin avatar model;
- Fig. 6: shows an avatar model with a high BMI;
- Fig. 7: shows the avatar model of Fig. 5 with a crushed cloth model;
- Fig. 8: shows the avatar model of Fig. 6 with a crushed cloth model;
- Fig. 9: shows a plurality of fixed layering positions on a torso of avatar model;
- Fig. 10: shows on the left side the representation of the first cloth model on the avatar model as shown in Fig. 7, i.e. in a first fixed layering position, and on the right side the representation of the first cloth model on the avatar model in the third fixed layering position as defined in Fig. 9;
- Fig. 11: shows on the left side the representation of the avatar model as shown in Fig. 7 with a specific marking for a number of polygons, and on the right side the representation of the avatar from the left side with the marking over the entire surface;
- Fig. 12: shows a partitioning of the avatar model with a number of polygon groups as defined in Fig. 11;
- Fig. 13: shows the marking of the group of polygons as in Fig. 11 within a full partitioning of the avatar model in such groups of polygons;
- Fig. 14: shows the assignment of one vertex for this polygon group from Fig. 13 in UV space;
- Fig. 15: shows the partitioning avatar model of Fig. 12 with a cloth model placed on it;
- Fig. 16: shows the marking of the group of polygons as in Fig. 13 within the cloth model;
- Fig. 17: shows the assignment of one vertex for this polygon group from Fig. 16 in UV space;
- Fig. 18: shows a shader where a grid of rectangles can be toggled on / off individually;
- Fig. 19: shows character and clothing asset vertex colors laid out in their unique UV space positions with a toggleable tile covering each;
- Fig. 20: shows the avatar model of Fig. 2 with a hidden cloth model;
- Fig. 21: shows the avatar model of Fig. 1 with a second cloth model applied;
- Fig. 22: shows a modified version of Fig. 21 with the second cloth model invisible; and
- Fig. 23: shows a modified version of Fig. 21 with the first cloth model is invisible too.

### DESCRIPTION OF PREFERRED EMBODIMENTS

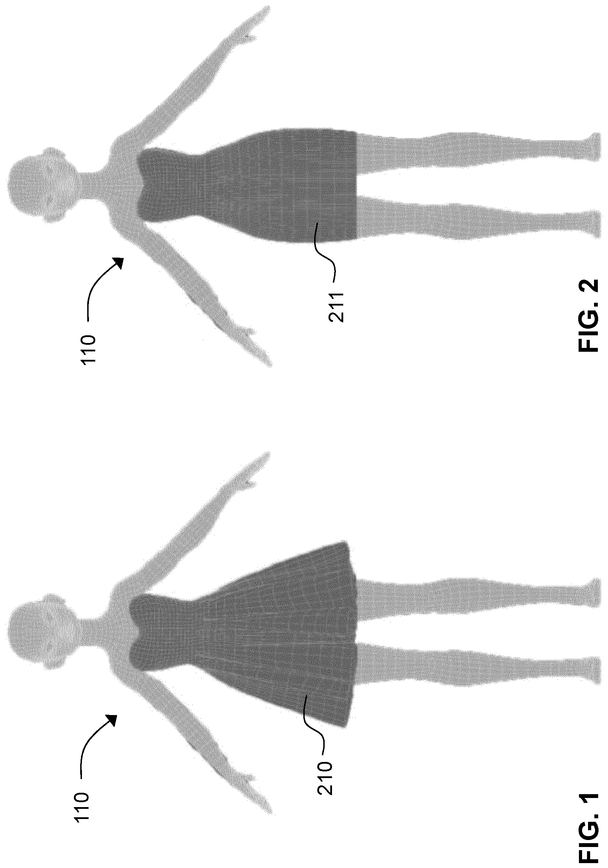

Fig. 1 shows an avatar model 110 wearing a first cloth model 210. The cloth model represents a one-piece dress as a clothing asset. Fig. 2 shows the avatar model 110 of Fig. 1 wearing the clothing asset of Fig. 1 as a crushed cloth model 211.

The terms avatar model and cloth model are related to the representation of data in images which are in the present drawings here 2-dimensional images. The data is usual 3D, if the world model 11 is 3D. The term crushed relates to the result of the UV mapping of the cloth model 210 on the body of the avatar model 110. The projection of the UV mapping can be cylindrical, spherical or any other mapping.

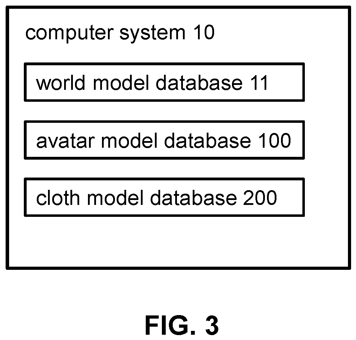

Fig. 3 shows a system overview of the computer system 10 comprising a world model 11, an avatar model database 100 and a cloth model database 200. The avatar model database comprises a number of avatar models, especially the avatar model 110 as shown in Fig. 1pp with an entire body with head, and extremities. The cloth model database comprises a number of clothing assets comprising any clothing items which could be found and used in real life, e.g. trousers, shorts, one-piece dresses as the first cloth model 210, t-shirts, jackets and also underwear.

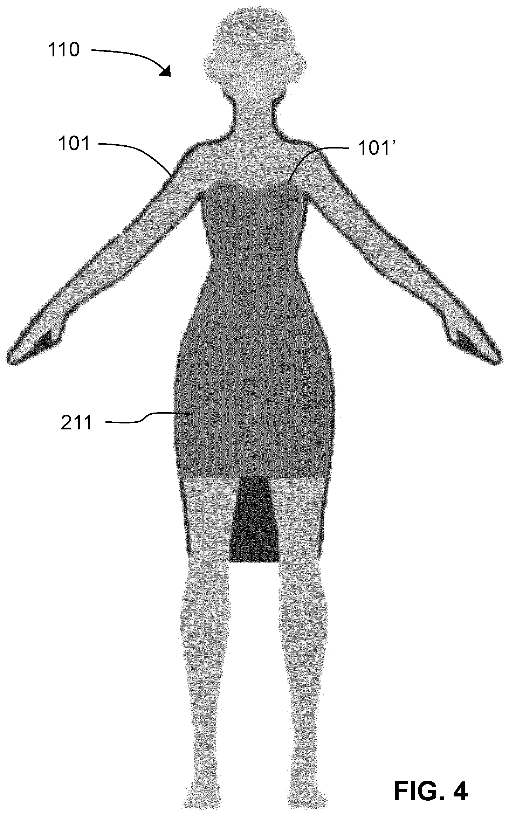

Fig. 4 shows a detail view of the crushed clothing asset 211 on the avatar model 110 of Fig. 2. The data of the crushed cloth model 211 is calculated to be in a set minimum distance 101, 101' from the surface of the character. The surface of the character is characterized by the 3D-data or mesh model of the avatar model 110. The crushed cloth model 211 is confined between the surface of the avatar model 110 and a set distance from said surface.

The minimum distance 101 is visible on the arms of the avatar model 110, since there is no clothing asset 211 on it. It is also present in all other areas around the avatar model 110, e.g. the legs, although the distance is not represented on the legs. It is noted that in a front view as in Fig. 4 the set distance 101' in the upper body area of the avatar model 110 is not visible. It would be visible in a side view on the 3D avatar model 110. The minimum distance 101 can be understood as a layer with the thickness of this minimum distance around the avatar model 110.

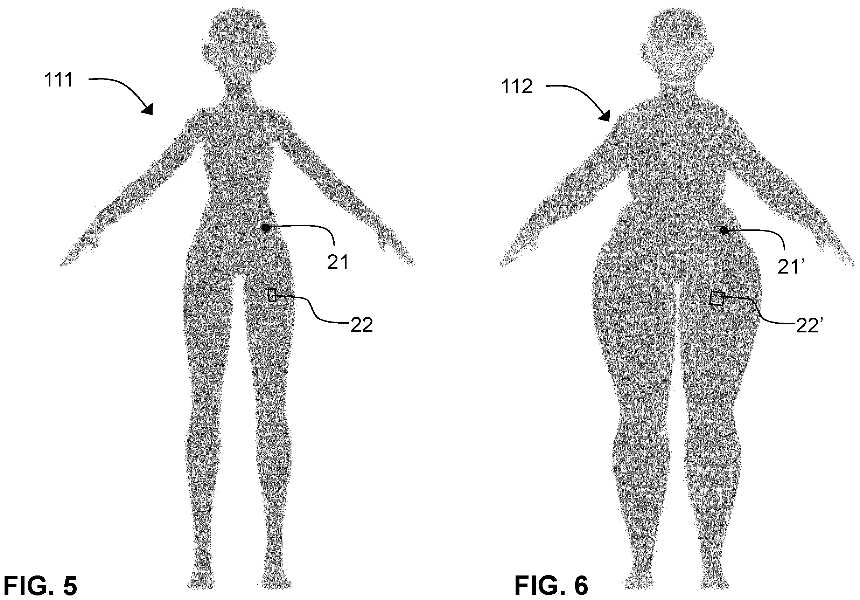

Fig. 5 shows a thin avatar model 111 and Fig. 6 shows an avatar model 112 with high BMI. Within the invention, avatar models 111 and 112 as elements of the avatar model database 100 comprise a number of vertices 21, 21' and related polygons 22, 22'. Vertices are points in space that define a 3D model's shape. Vertex 21 and 21' are essentially 3D coordinates (x, y, z) that indicates a single point on the surface of the avatar model 111 or 112, respectively. An edge is a straight line that connects two vertices in 3D space. A polygon 22, 22' is a surface created by connecting multiple edges around a space, thus connecting several vertices similar to vertices 21, 21'.

For every vertex the method according to the invention tracks the offset between two identical topologies and can apply the same offset to a unique asset, in our case the clothing. In other words, the avatar models 111 and 112 have identical topologies and the offset leads to deformations of polygons 22 and 22' and a move of vertices to 21 and 21'.

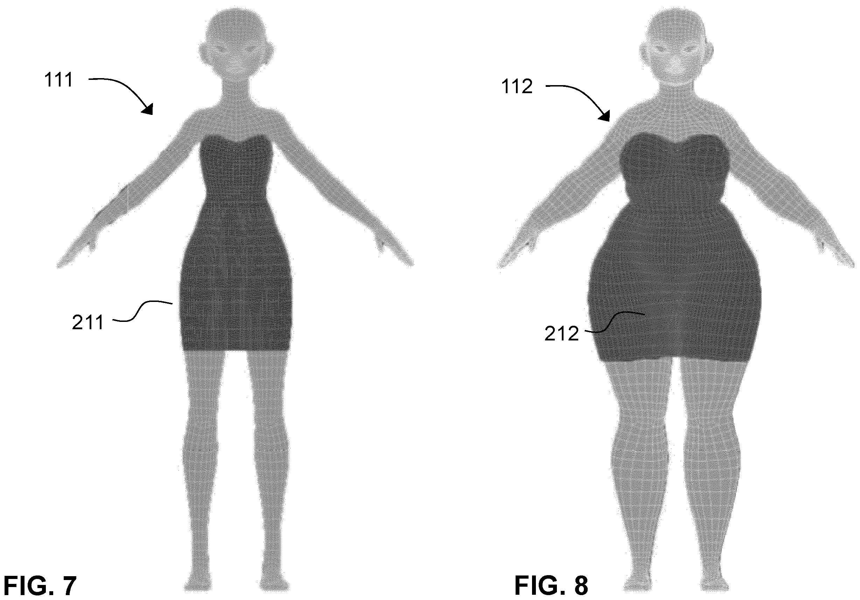

Fig. 7 and 8 show the avatar models of Fig. 5 and 6, respectively, with first crushed cloth models 211 and 212, respectively. Using the process outlined above the method warps each clothing asset, here first cloth model 110, to fit any of the present body types from the cloth model database 200, i.e. the first crush models 211 and 212, respectively. All the various body type fits can now be added as blendshapes, allowing a single clothing asset as first cloth model 210 to fit any body type.

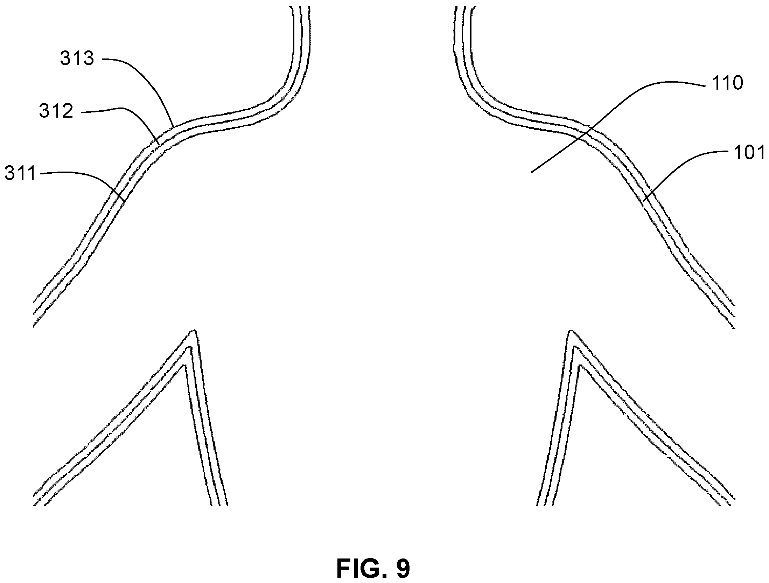

Fig. 9 shows a plurality of fixed layering positions on a torso of avatar model 110. Each asset, e.g. a cloth model 210, is able to occupy a plurality of, here three, fixed layering positions 311, 312 and 313. Each layering position is determined by its distance from the surface of the avatar model character, the inner layer 311 would be closest to the surface of the character and outer layer 313 furthest. The intermediate layer 312 is characterized by the line in between. Of course, it is possible to provide only two or more than three layers. By inflating the avatar model of the character in two increments three identical topologies with a depth offset are created. All of these increments have identical topology, so using the method morphs the clothing assets between layers and on all body types.

It is also possible to have different layering positions 311, 312 and 313 depending on the portion of the avatar model 110, e.g. a smaller distance 311 on arms and e.g legs, a middle distance 312 on the waist region and a higher distance 313 for the upper portion of the trunk. Then the distance change is predefined and applied between two adjacent polygons. It is also possible to apply the distance change over two adjacent polygons, wherein the line between these adjacent polygons provides an intermediate distance.

The use of the distances 311, 312 and 313 allow modifying the volume of the garment underneath. The number of distances is not necessarily connected to the number of layers of garments / clothes but can be used to create different effects for two adjacent layers of clothes.

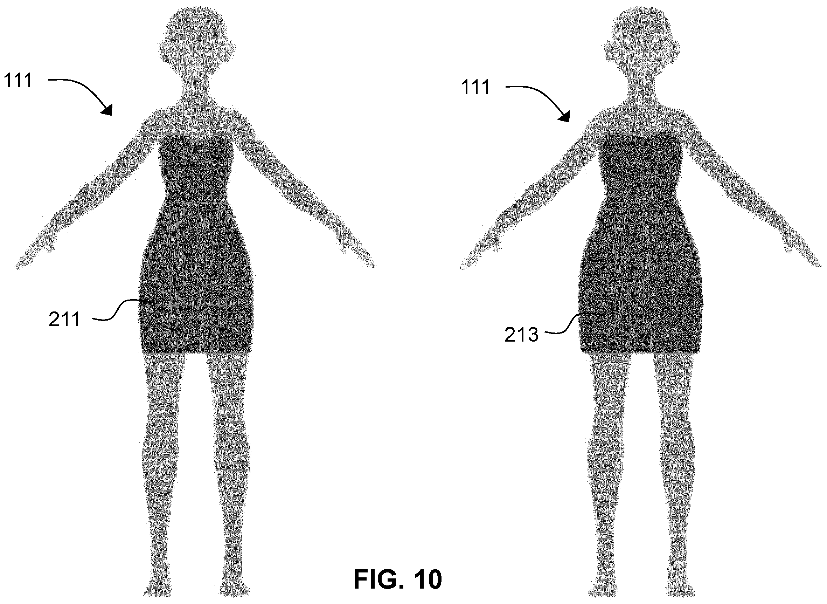

Fig. 10 shows on the left side the representation of the first cloth model 211 on the avatar model 110 as shown in Fig. 7, i.e. in a first fixed layering position 311, and on the right side the representation of the first cloth model 213 on the avatar model in the third fixed layering position 313 as defined in Fig. 9. For the crushed and original clothing assets the outer layer 313 position can be applied for each body type as an additional blendshape thus enabling each asset to move from its inner layer 311 position to its second intermediate layer position 312 and finally it can be positioned at the outer layer position 313.

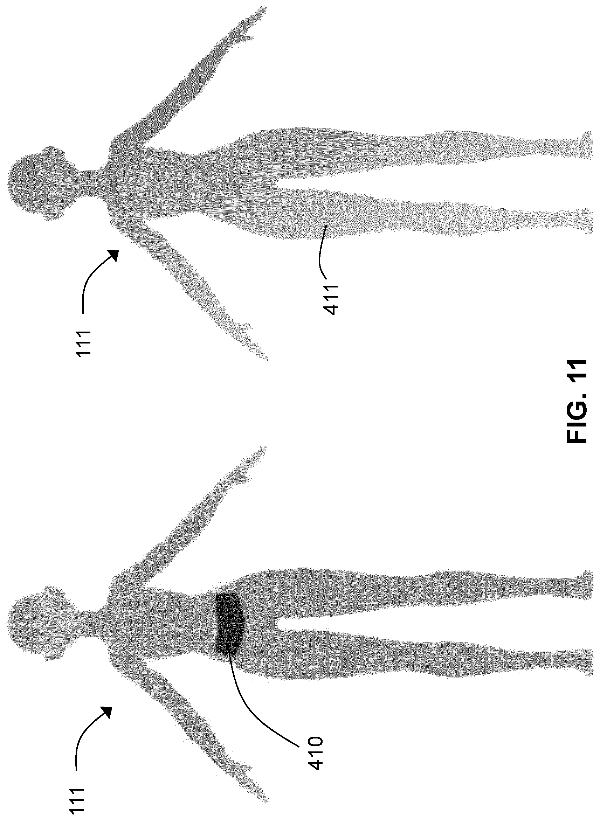

Fig. 11 shows on the left side the representation of the avatar model 111 as shown in Fig. 7 with a marking 410 for a specific number of polygons, and on the right side the representation of the avatar model 111 from the left side with the marking over the entire surface, noted as reference numeral 411. In other words, the left avatar model image reflects a group of polygons, noted below as partitioned polygon group 412, assigned with a unique vertex color on the character. The avatar model 111 on the right shows a representation of this happening across the entire body of the avatar model 111. In this way spatially connected groups of polygons 412 are created all over the body with a unique vertex color.

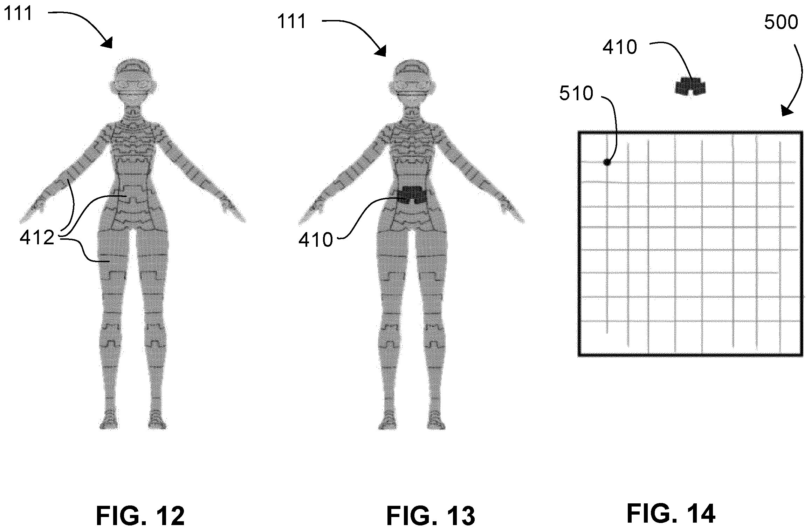

Fig. 12 shows a partitioning of the avatar model 111 with a number of polygon groups 412 as defined in Fig. 11. The avatar model 111 of the character is cut up by vertex (color) boundaries into a plurality of polygon groups 412. It is noted that this is a partitioning over the entire 3D avatar model 111, i.e. also on parts of the model not visible in the drawings, e.g. the back side. Fig. 13 shows the marking of the same group of polygons as in Fig. 11 with a full partitioning of the avatar model 111 as shown in Fig. 12.

Fig. 13 shows the assignment of one vertex for this polygon group from Fig. 12 in UV space. UV mapping is the 3D modeling process of projecting a 2D image to a 3D model's surface for texture mapping. Each partitioned polygon group 412 is assigned a color and is a vertex color group with here group 410 being selected.

Fig. 14 shows the assignment of one vertex 510 for this polygon group 410 in UV space 500. Each selection, here group 410, is shrunk down and assigned to a unique position in UV space. Now a unique point on a grid per vertex color is in UV space. Every point in a polygon group has the same vertex color, it's a group because it has that color in common. If that group is e.g. colored red, it will shut off the red group on the skin or underlying layer.

All vertices in a polygon group are assigned to the UV space position. The dot doesn't represent a vertex, it represents the polygon group scaled down so small it resembles a dot.

The color assigned to the polygons is a vertex color, which means that each corner of a polygon can hold a different vertex color since there are four vertices to a polygon, i.e. four possible colors for each. In the present case a polygon only has a single color, i.e. all four vertices have the same color. If that polygon has that color, it is grouped with polygons who are colored the same. That polygon group contains polygons and vertices as explained previously and all of that is scaled down in UV space so small it resembles a dot as seen in the diagram, then placed in it's unique uv position.

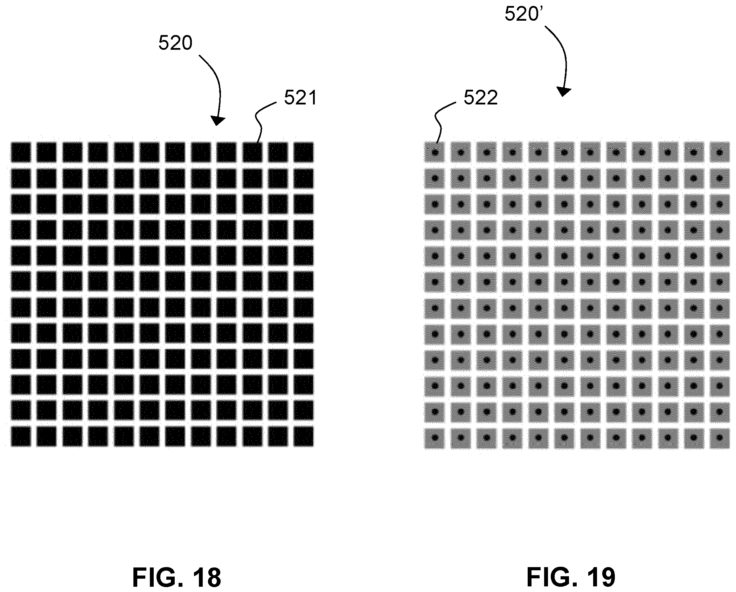

This explanation also applies to the description of Fig. 18 and 19.

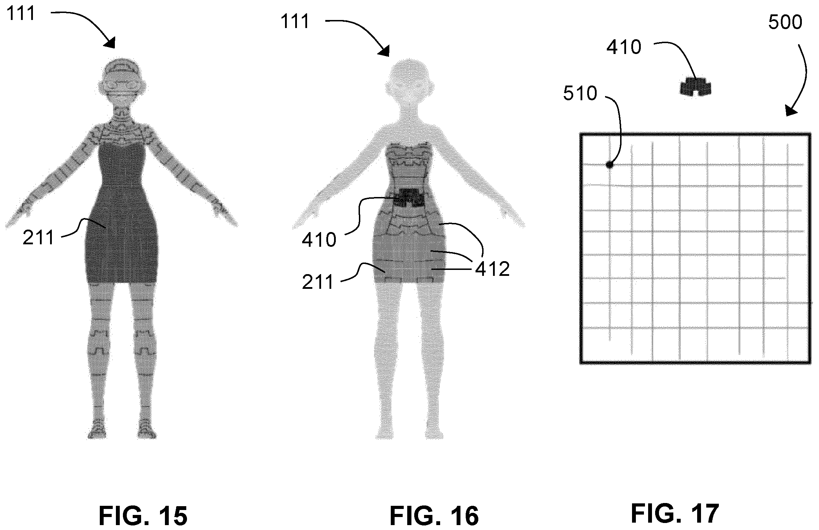

Fig. 15 shows the partitioning avatar model 111 of Fig. 12 with a cloth model placed on it. A clothing asset as crushed cloth model 211 is placed over the character made up of vertex color groups. Of course, the thin avatar model 111 can be replaced by models 112 or a generic model 110. At the same time the crushed cloth model 211 can be replaced by the model 210 and can be provided in position 213 as explained above.

Fig. 16 shows the marking of the group of polygons as in Fig. 13 within the cloth model. The colors are projected from the avatar model 111 of the character to the clothing assets, here cloth model 211. Fig. 17 shows the assignment of one vertex 510 for this polygon group 410 from Fig. 16 in UV space 500. In other words, the process is repeated as outlined above. And as noted above, every point in a polygon group has the same vertex color, it's a group because it has that color in common. The avatar model 111 as a character is related to a UV set storing with unique UV positions by vertex color and the same with the clothing assets in one or more cloth models. A comparison between Fig. 14 and Fig. 17 shows that a section of the stomach on the avatar model 111 of the character and a portion of the cloth model 211 of the clothing asset now occupy the same UV space, this is now the case for all vertex colors in the UV space. This is correct independent of the avatar model 111 (or 110 or 112) and independent from the positioning of the layer in positions 311, 312 or 313 as explained in connection with Fig. 9.

Fig. 18 shows a shader where a grid 520 of rectangles 521 can be toggled on / off individually. A shader is a GPU related piece of software, where inter alia the UV channel to be used can be chosen. The UV channel contains the rectangular grid 520, i.e. shader => UV channel => grid. The grid 520 of rectangles comprises an array of black colored points.

Fig. 19 shows the character and clothing asset vertex colors laid out in their unique UV space positions with a toggleable tile 522 covering each. A script processes the avatar model of the character and the cloth model of each clothing asset placed on it, if the clothing asset holds a matching vertex color to the character the shader tiles covering those vertex colors are turned off on the character (to be turned off means that the white tile disappears and turns that UV space black. The grid of tiles controls the alpha of the character or clothing asset, if the tile is active / white that vertex color polygon group is visible, if the tile is off / black that vertex color polygon group is invisible. In fact, an alpha value of 1 (=active) means totally opaque and a value of 0 means that this layer is transparent (=invisible).

A dot represents the position and scale of a cluster of polygons in UV space. A rectangle represents the alpha mask which is turned on or off to reveal or hide the cluster of polygons. Fig 19 is intended to show behind the curtain of Fig 18, to illustrate how the cluster of polygons is lined up in respect to the grid in the shader / UV channel. They represent the same asset whether that be clothing or character, just an x-ray representation to show how things line up.

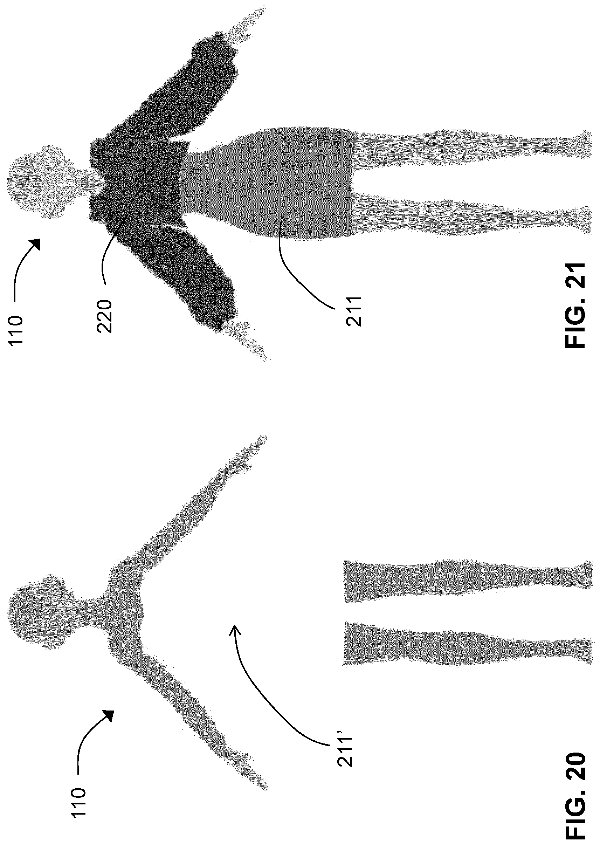

Fig. 20 is to be seen in connection with Fig. 2. As stated above, Fig. 2 shows the avatar model 110 of Fig. 1 with a crushed cloth model 211. Fig. 20 now shows the same avatar model 110 where the cloth model 211' of the dress is hidden, or in other words, the representation of the image provides an invisible patch of body.

An item of clothing and skin both containing a vector with the value (1,0,0), represented by the color red. These colors overlap spatially because all colors from the skin are projected onto the garments along the normal direction. For example, red from the chest will transfer to the chest area of the garments. Within the engine, the skin monitors any first layer asset and checks for matching vector values or colors. If a match is found, it deactivates the polygon group or vertices within the corresponding boundary that contain that value. This process is hierarchical: skin and first layer monitor second layer, and then skin, first layer, and second layer monitor a possible third layer. "deactivate" means that the shader changes the tile covering the UV space occupied by the red color (i.e. third vector value 1,0,0) from white to black. This change, via alpha masking, hides the corresponding polygon group or vertices within that boundary.

Fig. 21 is to be shown in connection with Fig. 1. As stated above, Fig. 1 shows the avatar model 110 with a first cloth model 210. Fig. 21 shows the avatar model 110 of Fig. 1 with a second cloth model 220 applied. Then, the dress of the first cloth model 210 has now switched to its crushed version, being the first layer, and a hoodie as second cloth model 220 is now applied in its original version as second layer. When a clothing asset is on the current highest layer, it is in its original version, however. When it is beneath the current highest layer, it is calculated in its crushed version.

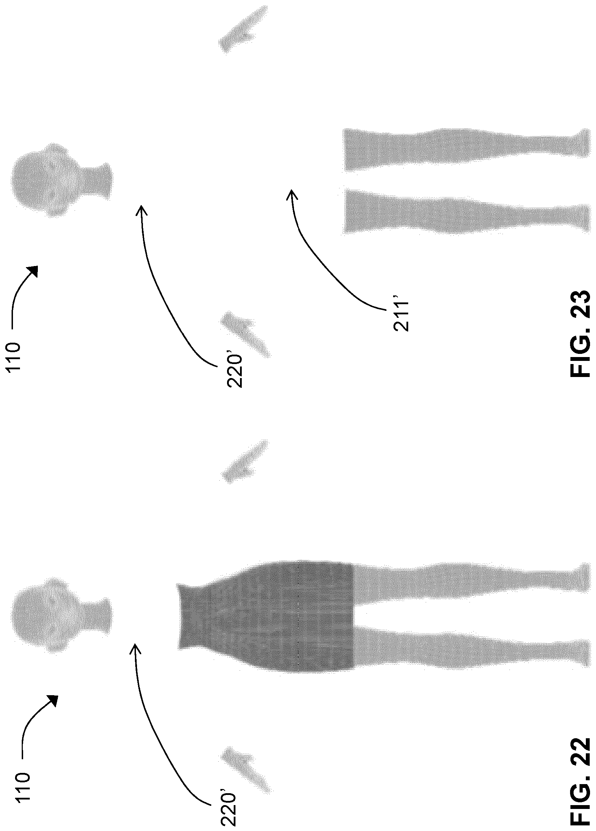

Starting from Fig. 21, the character as avatar model 110 is wearing two layers of clothing assets, i.e. the first cloth model 210 and the second cloth model 220. Fig. 22 now shows a modified image of Fig. 21 where the hoodie as second cloth model 220 is hidden to show how it has matched vertex colors with the dress of the first cloth model 210 and character as avatar model 110 and turned those underlying tiles off.

Starting from Fig. 22, Fig. 23 now shows a modified image of Fig. 22 where not only the hoodie as second cloth model 220 is hidden but the dress as first cloth model is hidden too, further revealing which vertex colors it matched with on the character.

Without reference to a specific drawing the following description is related to the representation of an avatar having in total four layers of clothing. The sequence of layers can be defined as follows: Skin > Underwear Layer 0 > Layer 1 > Layer 2 > Layer 3. Starting from a fully naked character, just skin, there are no assets on layer 1 which means no vertex colors sit on top of the skin and therefore none of the polygon clusters are hidden. Now a t-shirt is positioned on layer 1, the skin monitors this, reads the colors from the t-shirt; colors from the chest, back, shoulders etc. Layer 1 is a higher layer than the skin or underwear layer, therefore the skin knows to hide the polygon clusters which match those of the t-shirt. In the example, skin is the lowest level and (here) layer 3 is the highest level and therefore this behaviour continues as the representation takes into consideration more and more layers of the stack, which are of course not limited to a third layer.

### LIST OF REFERENCE SIGNS

- 10: computer system
- 11: world model
- 21: vertex of avatar 111
- 21': vertex of avatar 112
- 22: polygon of avatar 111
- 22': polygon of avatar 112
- 100: avatar model database
- 101: avatar model clothing distance
- 101': not visible avatar model clothing distance
- 110: avatar model
- 111: thin avatar model
- 112: avatar model with high BMI
- 200: cloth model database
- 210: first cloth model
- 211: first crushed cloth model (thin avatar model)
- 211': transparent first crushed cloth model
- 212: first crushed cloth model (high BMI model)
- 213: first crushed cloth model (third fixed layer position)
- 220: second cloth model
- 220': transparent second cloth model
- 311: inner layer
- 312: intermediate layer
- 313: outer layer
- 410: marked polygon group
- 411: marked avatar model
- 412: partitioned polygon group
- 500: UV space
- 510: dot / vertex point representing the polygon group 410
- 520: grid
- 520': grid
- 521: grid element
- 522: toggleable tile / grid element

## Claims

1. A computer implemented method of adapting a cloth model (210, 220) on an avatar model (110, 111, 112) as a 3D model creating a fitted cloth model (211, 220) in a three-dimensional virtual reality world, comprising the steps of
- scaling the cloth model (210, 220) uniformly as well as stretching and/or shrinking of the model uniformly matching an overall size of the avatar model (110. 111, 112) to generate a uniformly scaled cloth model,
- defining a plurality of polygons (22, 22') covering the surface of the avatar model (110, 111, 112),
- defining a plurality of groups of polygons (412) based on a predetermined number of said polygons (22, 22'),
- providing an UV map of the 3D Model of the avatar model and/or applied cloth model,
- assigning one dot (510) for each polygon group (410) in the UV map,
- assigning a color to the polygon groups (410) related to the avatar model (110, 111, 112),
- assigning a color to the polygon groups (410) related to the cloth model (210, 220),
- displaying the polygon groups (410) relating to the avatar model (110, 111., 112) or the cloth model (210, 220) whichever is the highest layer.

2. The method of claim 1, wherein the first cloth model is mapped (311) on the surface of the avatar model (110, 111, 112).

3. The method of claim 1 or 2, wherein the mapping is provided with a predetermined cloth distance (312, 313) from the surface of the avatar model (110, 111, 112).

4. The method of claim 3, wherein the predetermined cloth distance (312, 313) is determined based on each group of polygons.

5. The method of claim 3 or 4, wherein an avatar distance value associated to each polygon group of the cloth model is added to the predetermined cloth distance (312, 313).

6. The method of any one of claims 2 to 5, wherein a second cloth model (220) is adapted to the avatar model (110, 111, 112) as a higher layer over the avatar model and/or the first cloth model.

7. A non-transitory computer-readable medium having instructions stored thereon that, responsive to execution by a processor, cause the processor to perform the method of any one of claims 1 to 6.

8. An apparatus comprising:
- a display device adapted to present three-dimensional avatar models having at least one layered clothing model,
- a memory having an application stored therein, and
- a processor coupled to the display device and to the memory and adapted to execute the application stored in the memory, wherein the application is executable by the processor to cause the processor to perform the method of any one of claims 1 to 6.
